# EUROPÄISCHE PATENTSCHRIFT

(11) **EP 0 688 457 B1**
(45) Veröffentlichungstag und Bekanntmachung des Hinweises auf die Patenterteilung: **09.07.1997**
(21) Anmeldenummer: 94909089.8
(22) Anmeldetag: 01.03.1994
(51) Int. Cl.: G11B 5/84, G11B 23/50

(54) **VERFAHREN SOWIE VORRICHTUNG ZUR BEARBEITUNG DER OBERFLÄCHE VON FLEXIBLEN BANDFÖRMIGEN MATERIALBAHNEN**
SURFACE TREATMENT PROCESS AND DEVICE FOR FLEXIBLE ELONGATED WEBS OF MATERIAL
PROCEDE ET DISPOSITIF DE TRAITEMENT DE LA SURFACE DE BANDES ALLONGEES EN MATERIAUX SOUPLES

(30) Priorität: 10.03.1993 DE 4307527
(43) Veröffentlichungstag der Anmeldung: 27.12.1995
(73) Patentinhaber: EMTEC Magnetics GmbH, 67059 Ludwigshafen (DE)
(72) Erfinder: SCHLATTER, Manfred, D-79111 Freiburg (DE); GOLTZ, Ulrich, D-77704 Oberkirch (DE)
(74) Vertreter: Karau, Wolfgang, Dr.
(86) Internationale Anmeldenummer: EP9400582
(87) Internationale Veröffentlichungsnummer: WO9420955

(56) Entgegenhaltungen:
- DE-A- 2 803 914
- US-A- 2 688 567

## Beschreibung

Die Erfindung betrifft ein Verfahren der Oberflächenbearbeitung zur Verringerung der Abrasivität von flexiblen bandförmigen Materialbahnen, welche auf mindestens einer Seite mit einer Beschichtung versehen sind, die abrasive Teilchen enthält, wobei die beschichtete Seite der Materialbahn mit der beschichteten Seite der umgelenkten Materialbahn gegenläufig in reibenden Kontakt gebracht wird und worauf anschließend von der beschichteten Seite der Materialbahn aufliegende Teilchen entfernt werden sowie eine Vorrichtung zur Durchführung des Verfahrens zur Oberflächenbearbeitung.

Es sind eine Reihe von Vorrichtungen und/oder Verfahren bekannt, bei denen die Oberfläche flexibler bandförmiger Materialbahnen, beispielsweise von magnetischen Aufzeichnungsträgern und hierbei insbesondere Videobändern, bearbeitet werden. Vorrangige Ziele dieser Oberflächenbearbeitung sind
- Reinigung der Bahnoberfläche von aufliegenden kleinen Teilchen zur Senkung der Ausfallrate (Dropout-Fehler)
- Verringerung des Magnetkopf-Abriebs, da speziell magnetische Aufzeichnungsträger aus der Oberfläche hervorstehende Teilchen haben können, beispielsweise magnetisierbare Partikel oder aber auch unmagnetische anorganische oder organische Teilchen, welche eine schleifende Wirkung haben, wodurch die Magnetköpfe für die Aufnahme sowie die Wiedergabe von magnetischen Aufzeichnungen schnell verschlissen werden. Dies spielt eine besondere Rolle bei Duplizierbetrieben, bei welchen große Mengen magnetischer Aufzeichnungsträger bei hoher Geschwindigkeit mit magnetischen Aufzeichnungen versehen werden.
   Auch tritt bei dem sogenannten TMD-Verfahren, bei welchem ein magnetischer Aufzeichnungsträger beim Kontaktkopieren mit einem Masterband bis zum Curiepunkt der magnetisierbaren Teilchen erhitzt wird, das Erfordernis auf, daß das Abriebverhalten der Magnetschicht minimiert wird, wobei die meisten Materialen dieser Art harte CrO₂-pigmente als magnetisierbare Teilchen enthalten.

Verfahren sowie Vorrichtungen zur Oberflächenbearbeitung sind beispielsweise bekannt aus den DE 28 03 914, DE 38 00 196, DE 38 12 851 sowie den japanischen Anmeldungen 04/182929, 04/184712, 38115 (1991), 02/285516 und der US 5 012 548. Nach der Lehre der vorgenannten Dokumente wird entweder die Schichtoberfläche der Materialbahn mit einem speziellen Schleifband in Kontakt gebracht, wobei dieses mit definiertem Kontaktdruck gegenläufig zum Band bewegt wird, oder die Schicht wird über rotierende Zylinderwalzen mit bestimmter Rauhigkeit geführt, oder es wird die Schicht über eine ebenfalls rotierende zylindrische Walze mit harten Kanten bewegt. Bei den vorgenannten Anordnungen kann es von Nachteil sein, daß bei Dauerbetrieb sich die Oberfläche des Schleifbandes beziehungsweise der Schleifzylinder verändert, so daß nach einer gewissen Zeit die Schleifwirkung verändert wird und dadurch keine gleichmäßige Wirkung erzielbar ist.

Aus der DE 38 00 197 ist ein Verfahren zur Oberflächenbearbeitung von Substratplatten bekannt, bei der diese nach dem Plandrehen unter Zusatz einer Polierflüssigkeit aus einer wässrigen Lösung mit Aluminiumoxidpulver und organischen Zusätzen mit Läppscheiben feinbearbeitet werden, wobei die Läppscheiben mit einem Belag aus einem elastischen Werkstoff versehen sind.

Des weiteren sind Anordnungen zur Verringerung der Abrasivität von beschichteten Materialbahnen bekannt, bei denen die Schichtseite über eine scharfe Kante geführt wird. Derartige Anordnungen sind beschrieben in der DE 21 19 094, DE 32 11 226, der DE-A 42 20 860 sowie der japanischen Anmeldung 03/288326. Nach der Lehre der US 3 616 478 läuft ein Magnetband über eine Klinge, welche aus kristallinem keramischem Material besteht, und wobei der Winkel der Klinge zum Magnetband einen bestimmten Betrag haben soll. Die US 3 674 579 beschreibt ein Verfahren, bei der die Schichtseite des zu reinigenden Bandes über die parallelen Kanten eines endlosen Stahlbandes läuft, welches zwischen zwei Rollen eingespannt ist, von denen eine motorisch angetrieben wird.

Diese Vorrichtungen haben den Nachteil, daß bei einem breiten Materialband aufwendige Maßnahmen ergriffen werden müssen, um die an den Klingen anhaftenden Teilchen wieder, beispielsweise durch Luftabsaugung, zu entfernen. Dieser Nachteil kann teilweise dadurch umgangen werden, wenn erst die jeweils in Gebrauchsbreite getrennten Materialstreifen über die Klingen laufen. Dann ist jedoch der apparative Aufwand sehr groß. In beiden Fällen besteht jedoch der prinzipielle Nachteil, daß nach einiger Zeit die Klingen verschlissen sind und ersetzt werden müssen.

Verfahren sowie Vorrichtungen zum Entfernen von auf der Schicht aufliegenden kleinen Teilchen, beispielsweise durch Absaugen, Abwischen, Ablösen oder durch elektrostatische Mittel sind beschrieben in den Publikationen US 5 144 513, SU 1 675 942, US 3 102 667, US 5 077 881 sowie US 4 887 623.

Ein häufig zur Oberflächenbearbeitung von flexiblen bandförmigen Materialbahnen eingesetztes Verfahren ist das Kalandrieren, bei welchem beschichtete Kunststoff-Folien zwischen zwei sich drehenden Kalanderwalzen, die unter definiertem Druck und definierter Temperatur gegeneinander drücken, hindurchgezogen werden. Das Kalandrieren wird üblicherweise in Längsrichtung der Folienbahn durchgeführt. Untersuchungen der Anmelderin haben gezeigt, daß durch das Kalandrieren allein die Abrasivität der Beschichtung nicht befriedigend gesenkt werden kann.

Ein Verfahren der eingangs genannten gattungsgemäßen Art ist in der US 2 688 567 beschrieben, bei der die beschichteten Seiten eines magnetischen Aufzeichnungsträgers zwischen zwei beweglichen Andruckrollen gegenläufig bei Linienberührung aneinander vorbeigeführt werden, um auf diese Weise geglättet zu werden. Die Glättung wird nach den Ausführungen in dieser Schrift vermutlich durch Eindrücken der abrasiven Teilchen in die plastisch deformierbare Schicht erreicht. Eine Linienberührung dürfte auch zur definierten Verringerung der Abrasivität kaum geeignet sein.

Der Erfindung lag die Aufgabe zugrunde, ein Verfahren zur Bearbeitung der Oberflächen von bandförmigen Materialbahnen zu finden, welches nicht die Nachteile des oben genannten Standes der Technik hat, welches reproduzierbar und kostengünstig durchzuführen ist und wobei die Abrasivität der Schicht markant gesenkt wird.

Erfindungsgemäß wurde die Aufgabe gelöst mit einem Verfahren mit den im kennzeichnenden Teil des Anspruchs 1 genannten Merkmalen sowie mit einer Vorrichtung zur Durchführung des erfindungsgemäßen Verfahrens. Weitere Einzelheiten der Erfindung gehen aus den Unteransprüchen, der Beschreibung sowie den Zeichnungen hervor.

Nachfolgend wird die Erfindung anhand der Zeichnungen näher erläutert und zwar zeigt
- Figur 1: eine schematische Darstellung einer Vor richtung zur Durchführung des erfindungs gemäßen Verfahrens
- Figur 2: eine weitere Vorrichtung
- Figur 3: eine schematische Darstellung einer Vorrich tung ähnlich Figur 2 bei eingeschwenkter Be rührungswalze der Materialbahnen
- Figur 4: eine schematische Darstellung analog zu Figur 3, jedoch mit ausgeschwenkter Berührungswalze
- Figur 5: eine schematische Darstellung analog zu Figur 3, jedoch mit angeschwenkter Reinigungswalze sowie Absaugevorrichtung.

Das Wesen des erfindungsgemäßen Verfahrens besteht darin, daß die abrasiv wirkende beschichtete Oberfläche der Materialbahn mit sich selbst, also wieder mit einer beschichteten abrasiven Oberfläche bearbeitet wird, indem der Bahnverlauf in der Vorrichtung so geführt wird, daß die Oberflächen unter vorgegebenen Bedingungen über eine bestimmte Länge sich berühren beziehungsweise in reibenden Kontakt miteinander geraten. Die Bahnbewegung ist in der Berührungszone gegenläufig so, daß sich als Relativgeschwindigkeit zwischen den beiden Oberflächen die doppelte Bahngeschwindigkeit einstellt. Die Bearbeitung findet gleichzeitig auf beiden Oberflächen statt: zuerst trifft die zuletzt abgewickelte noch unbearbeitete Oberfläche auf eine bereits vorher bearbeitete Oberfläche, die dann selbst zur einmalig bearbeiteten Oberfläche wird und die nach der Umlenkung mit einer neuen noch nicht bearbeiteten Oberfläche in Berührung kommt. Jede der beiden Oberflächen bearbeitet also dabei die andere, wobei als Ergebnis, wie aus den nachfolgenden Beispielen hervorgeht, in der Tat eine markante Senkung der Abrasivität resultiert. Gleichfalls wird durch geeignete Zusatzeinrichtungen, die weiter unten geschildert werden, der bei der Bearbeitung entstehende Gleitstaub in effektiver Weise abgesaugt, wodurch die Anzahl der aufliegenden Teilchen auf ein Minimum reduziert wird.

Das erfindungsgemäße Verfahren wird im Folgenden anhand des Beispiels der Oberflächenbearbeitung der Magnetschicht eines magnetischen Aufzeichnungsträgers näher erläutert, ohne jedoch die Erfindung auf diesen Anwendungsfall zu beschränken.

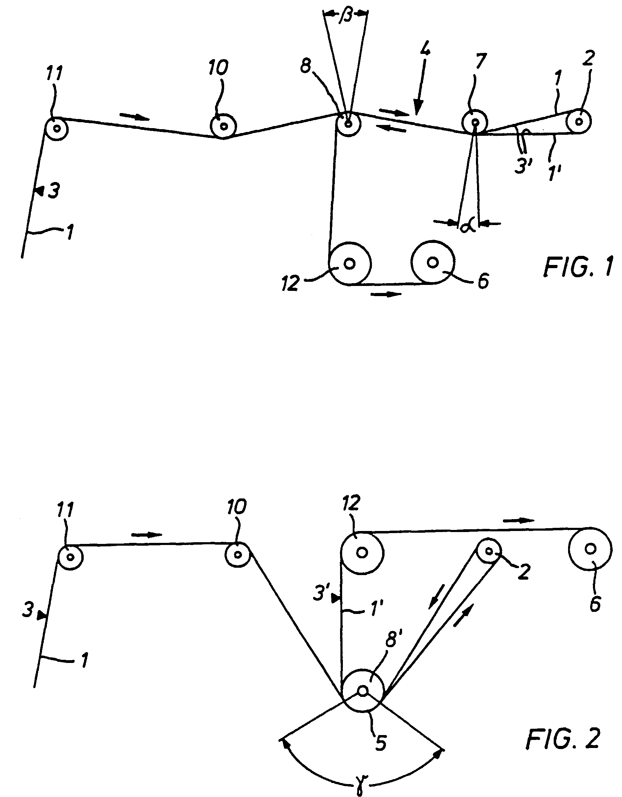

Eine Vorrichtung zur Durchführung des Verfahrens zur Oberflächenbearbeitung ist schematisch in Figur 1 dargestellt. Die Materialbahn (1) besteht aus einem Polyethylenterephthalat-Schichtträger, welcher eine Dicke im Bereich von 5 - 200 µm haben kann. Auf einer Seite ist eine magnetische Beschichtung (3) aufgebracht, deren Zusammensetzung noch später an Beispielen geschildert wird und die im allgemeinen eine Schichtdicke von 1 - 30 µm besitzt. Die magnetische Beschichtung enthält hauptsächlich magnetisierbare feinteilige Pigmente, beispielsweise CrO₂, γ-Fe₂O₃, Fe₃O₄, Metallpulver, Legierungen oder Mischungen davon. Die Pigmente sind in einem in organischem Lösungsmittel löslichen polymeren Bindemittel, wie Polyurethan, Vinylpolymer oder anderen dispergiert, außerdem kann die Beschichtungszusammensetzung noch weitere Zusätze wie aus feinteiligen anorganischen oder organischen Pigmenten bestehende nichtmagnetische Schleifteilchen, Netzmittel, Gleitmittel und Härtemittel und anderes enthalten. Beispiele für magnetische Beschichtungen sind weiter unten genannt.

Die Materialbahn läuft nach der Beschichtung und nachfolgenden Trocknung und gegebenenfalls Kalandrierung in Pfeilrichtung über Führungswalzen (11, 10, 8, 7) und nachfolgend über eine Umlenkwalze (2), welche die Bahn in ihre Ausgangsrichtung zurückführt. Die ankommende (1) und die rückgeführte Bahn (1') verlaufen dann gemeinsam über die Berührungsstrecke (4), zwischen den Führungswalzen (7, 8) und auf der Umschlingungsstrecke der Walzen (7, 8), wobei die Walze (8) gleichzeitig Umlenkwalze für die rückgeführte Bahn (1') ist. In der Strecke (4) kann von beiden Seiten die Materialbahn (1, 1') mit der noch unbehandelten Beschichtung (3) beziehungsweise der gegen sich selbst geschliffenen Schicht (3') durch (nicht gezeichnete) Andruckvorrichtungen unter definierten Bedingungen beaufschlagt werden. Anschließend läuft die so behandelte Materialbahn über die Führungswalzen (8, 12) zu einer Aufrollung (6) zur weiteren Verarbeitung oder zu einer Trennmaschine zum Längsschneiden in die benötigten Gebrauchsbreiten. Selbstverständlich ist es mit dem erfindungsgemäßen Verfahren auch möglich, die Materialbahn bereits vor dem Durchgang durch die eben genannte Oberflächenbehandlungsstrecke bereits in einzelne Streifen zu trennen und dann jeden einzelnen Streifen wie geschildert zu behandeln und anschließend aufzuwickeln.

Eine abgewandelte Vorrichtung ist in der Figur 2 dargestellt. Bei dieser läuft die Materialbahn (1) zuerst mit der Rückseite über Umlenkwalzen (10, 11) und dann mit der Schichtseite (3) vor sowie nach dem Umlenkvorgang durch die Umlenkwalze (2) lediglich beim Passieren der Führungs- und Umlenkwalze (8') über die Berührungszone (5) beim Passieren eines Teiles des Umfanges dieser Führungswalze. Der weitere Verlauf der Materialbahn (1') mit der behandelten Beschichtung (3') geschieht so wie anhand der Figur 1 geschildert.

Die Berührungszonen (4, 5) sowie der Anpreßdruck der beiden Oberflächen (3, 3') gegeneinander wird in den Vorrichtungen gemäß Figuren 1 und 2 durch die Länge der Strecke (4) sowie wie in beiden Figuren dargestellt durch geeignete Wahl des Umlenkwinkels (α, β, γ) an den Führungs- beziehungsweise Umlenkwalzen (7, 8, 8') sowie durch geeignete Einstellung der Bahnzugspannung vor und hinter der erfindungsgemäßen Vorrichtung erreicht. Die Winkel (α, β, γ ) können im Bereich von größer als 0 und kleiner als 180° liegen, gegebenenfalls, falls es die geometrischen Verhältnisse erlauben, sogar größer als 180°. Der Winkel γ an der Umlenkwalze (8') bewegt sich vorzugsweise im Bereich von 40°.

Die Länge der Berührungszone liegt zwischen 2 und 60 mm, besonders bevorzugt zwischen 4 - 25 mm. Die Anpreßkraft wird, wie bereits ausgeführt, über den Bandzug eingestellt, letzterer liegt im Bereich von 0,05 - 0,20 N/mm Bandbreite, besonders bevorzugt bei 0,1 N/mm Bandbreite.

Die Durchmesser der Umlenk- und Führungswalzen können an sich in weiten Grenzen gewählt werden, vorzugsweise liegen sie bei 10 - 50 mm.

Selbstverständlich ist auch ein Einbau der erfindungsgemäßen Vorrichtung in anderen, am Verarbeitungsprozeß der Materialbahn beteiligten Komponenten, beispielsweise der Beschichtungsmaschine oder dem Kalander denkbar.

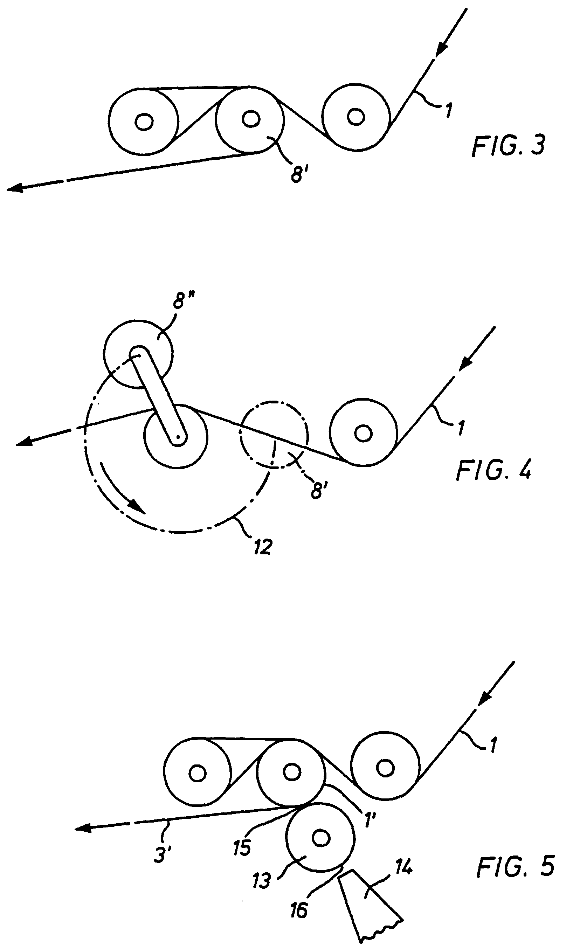

Anhand der Figuren 3 und 4 werden nun noch die besonderen Bedingungen beim Einfädeln der Materialbahn beziehungsweise bei einem Bahnwechsel, also dem Durchgang einer Klebestelle an der Verbindungsstelle zweier Materialbahnen anhand einer vereinfachten schematischen Darstellung geschildert. Dabei ist die Berührungswalze (8') ausschwenkbar. Beim Anfahren beziehungsweise beim Durchgang einer Klebestelle wird die Walze (8') entlang einem Schwenkkreis (12) durch eine geeignete Führung ausgeschwenkt (8"), so daß die Materialbahn (1) in diesem Fall, wie in Figur 4 dargestellt, keine Oberflächenbearbeitung erfährt, während sie bei eingeschwenkter Berührungswalze (8'), wie in Figur 3 dargestellt, den oben beschriebenen Bearbeitungsvorgang während der Umschlingung der Walze (8') durchmacht.

Da bei der beschriebenen Bearbeitung der Oberfläche der Magnetschicht staubförmige Rückstände entstehen, enthält die erfindungsgemäße Vorrichtung eine Reinigungseinheit, welche in erster Linie nicht die Reinigung einer Materialbahn überhaupt, sondern vor allem der Reinigung der durch die Vorrichtung bearbeiteten Bahn dienen soll, also nur dann im Eingriff ist. Dies geht aus der Figur 5 hervor. Die Reinigungseinheit besteht beispielsweise aus einer Rolle (13), welche mit Vlies, Velours, Velours-Samt oder einem ähnlichem staubaufnehmenden Material bespannt oder von einem solchen, dann bahnförmig vorliegenden Material umschlungen ist. Auf der der reinigenden Stelle (15) gegenüberliegenden Stelle (16) wird der anhaftende Staub durch eine Absaugungsvorrichtung (14), beispielsweise mittels einer Breitschlitzdüse, wieder von der Bespannung entfernt. Eine andere Möglichkeit besteht darin, daß die Reinigungswalze (13) einen klebenden Überzug hat, welche die auf der Beschichtungsseite (3') aufliegenden Teilchen mitnimmt. In diesem Fall kann die Absaugevorrichtung (14) wegfallen.

### Beispiel 1

In einer Rührwerkskugelmühle mit einem Inhalt von 1,5 Volumenteilen, welche mit 2,7 kg keramischen Kugeln mit einem Durchmesser zwischen 0,7 und 1,5 mm gefüllt war, wurden 4500 g Lösemittel Tetrahydrofuran, 912 g einer 50%igen Lösung eines Polyurethanharnstoffs mit einer OH-Zahl von 55, 126 g einer 50%igen Lösung eines Polyurethanharnstoffacrylats, 510 g einer 20%igen Lösung eines Polyvinylformals, 1800 g eines ferromagnetischen Chromdioxids mit einem Koerzitivwert von 56 kA/m mit einer mittleren Nadellänge von 0,24 µm und mit einer BET-Oberfläche von 33 m²/g, 1200 g γ-Fe₂O₃ (Co-dotiert, H_{c} = 63 kA/m, BET = 40 m²/g), 30 g Zinkoleat, 15 g Stearinsäure, 30 g Methylstearat, eingefüllt und die Dispersion 12 Stunden lang feinstgemahlen. Die magnetische Dispersion wurde anschließend unter Druck filtriert und unmittelbar vor dem Auftragen auf einen 15 µm dicken Polyethylenterephthalat-Schichtträger unter Rühren mit, bezogen auf jeweils 1 Teil Dispersion, 0,04 Teilen einer 50%igen Lösung eines Triisocyanats versehen. Die mit einer Trockendicke von 3 µm beschichtete Materialbahn wurde nach Durchlaufen eines Magnetfeldes zur Ausrichtung der magnetischen Pigmente bei Temperaturen zwischen 50 °C und 80 °C getrocknet und durch Hindurchführen zwischen beheizten Walzen unter einem Liniendruck von 200 kg/cm geglättet. Anschließend wurde die Materialbahn durch eine Vorrichtung gemäß Figur 2 hindurchgeführt, wobei der Umlenkwinkel γ beim Durchgang durch die Führungswalze (8') 40° betrug, was einer Berührlänge von etwa 14 mm entspricht. Die Breite der Materialbahn betrug 660 mm, der Bahnzug betrug 48 N, die Bahngeschwindigkeit war 180 m/min. Anschließend wurde die Materialbahn in 1/2" (12,70 mm) breite Streifen geschnitten und in VHS-Videocassetten konfektioniert.

### Vergleichsbeispiel 1

Es wurde wie im Beispiel 1 verfahren, jedoch wurde die Materialbahn nach dem Kalandrieren durch eine Klingenreinigungsstrecke geführt, wie sie in der Figur 2 der bereits erwähnten Anmeldung DE-A-42 20 860 beschrieben ist.

Von den geschnittenen magnetischen Aufzeichnungsträgern, welche gemäß Beispiel und Vergleichsbeispiel hergestellt worden waren, wurde die Messung der Restabrasivität durchgeführt.

Verschiedene Verfahren zur Messung der Abrasivität sind ausführlich in der Monografie von F. Jorgensen "The complete Handbook of Magnetic Recording", 3rd Edition, auf den Seiten 427 - 437 abgehandelt. Im vorliegenden Fall wurde wie folgt verfahren.

Jeweils 522 m der so geschnittenen beiden Bänder wurden mit der Schichtseite unter einem Bahnzug von 0,4 N mit einer Geschwindigkeit von 62 m/min über die 90° Kante eines Ferritwürfels, Hersteller: Firma Sumitomo, Bezeichnung HYR 2 B, unter einem Ablenkwinkel von 20° (dies entspricht einem Umschlingungswinkel von 160°) gezogen. Gemessen wird das durch 1 m Bandlänge abgeschliffene Volumen des Ferritkeils in µm³.

Das nach dem Beispiel 1 hergestellte Band hatte lediglich eine Restabrasivität von 6,9 µm³, während das nach dem Vergleichsbeispiel 1 behandelte Band eine Restabrasivität von 18,3 µm³ aufwies. Die nach üblichen Verfahren gemessenen Dropout-Raten der Bänder gemäß Beispiel 1 und Vergleichsbeispiel 1 waren praktisch identisch.

### Beispiel 2

| Eine Dispersion der Zusammensetzung | Gew.-Teile |
|---|---|
| Co-dotiertes Eisenpulver | 60 |
| (BET = 58 m²/g, _{I}H_{c} = 125 kA/m) Vinylchlorid-Copolymer | 9 |
| Polycarbonat-Polyurethan | 9 |
| Carbonsäurehaltiges Polyalkylenoxidacrylat | 4 |
| α-Al₂O₃ | 7 |
| Gleitmittel | 2 |
| Dispergator | 2 |
| Diisocyanat | 2 |
| Tetrahydrofuran | 250 |

wurde hergestellt, wie im Beispiel 1 geschildert. Die Viskosität der Dispersion betrug 1450 mPa · s.

Diese Dispersion wurde mit einer Trockendicke von 2 µm auf einen 15 µm dicken Polyethylenterephthalat-Schichtträger aufgetragen. Die weitere Behandlung geschah wie im Beispiel 1. Anschließend wurde die Bahn in 8 mm breite Streifen längsgeschnitten und in 8 mm-Video-Cassetten konfektioniert.

### Vergleichsbeispiel 2

Es wurde wie in Beispiel 2 verfahren, jedoch wurde nach dem Glätten keine anschließende Oberflächenbearbeitung gemäß der vorliegenden Erfindung durchgeführt.

Anschließend wurde die Abrasivität beider Bänder so wie mit den Proben nach Beispiel 1 und Vergleichsbeispiel 1 durchgeführt.

Das nach Beispiel 2 hergestellte Material hatte eine Abrasivität von 10 µm³, das nach dem Vergleichsbeispiel 2 hergestellte dagegen eine Abrasivität von 30 µm³.

## Patentansprüche

1. Verfahren der Oberflächenbearbeitung zur Verringerung der Abrasivität von flexiblen bandförmigen Materialbahnen, welche auf mindestens einer Seite mit einer Beschichtung versehen sind, die abrasive Teilchen enthält, wobei die beschichtete Seite (3) der Materialbahn (1) mit der beschichteten Seite (3') der umgelenkten Materialbahn (1') gegenläufig in reibenden Kontakt gebracht wird und worauf anschließend von der beschichteten Seite aufliegende Teilchen entfernt werden, dadurch gekennzeichnet, daß die beschichtete Seite (3) der Materialbahn (1) entlang einer Berührungsstrecke (4, 5), deren Länge im Bereich von 2 - 60 mm liegt, mit der beschichteten Seite (3') der umgelenkten Materialbahn (1') gegenläufig reibschlüssig mit einem Bandzug im Bereich von 0,05 - 0,20 N/mm Bandbreite geführt wird.

2. Verfahren nach Anspruch 1, dadurch gekennzeichnet, daß die Materialbahn (1, 1') über eine gemeinsame Berührungsstrecke (4), umfassend zwei Umlenkwalzen (7, 8) und einen dazwischenliegenden linearen Abschnitt geführt wird.

3. Verfahren nach Anspruch 1, dadurch gekennzeichnet, daß die Materialbahn über eine gemeinsame Berührungsstrecke (5) während der gemeinsamen Umschlingung um ein und dieselbe Umlenkwalze (8') geführt wird.

4. Verfahren nach den Ansprüchen 2 und 3, dadurch gekennzeichnet, daß die Umschlingungswinkel (α, β, γ) der Umlenkwalzen (7, 8, 8') zwischen größer als 0 und kleiner als 180° betragen.

5. Verfahren nach Anspruch 1, dadurch gekennzeichnet, daß aufliegende Teilchen auf der Schichtseite (3') der behandelten Warenbahn anschließend an die Berührungsstrecke durch eine anschwenkbare Reinigungswalze (13), welche mit einer Absaugungsvorrichtung (14) beaufschlagt wird, entfernt werden.

6. Vorrichtung zur Durchführung eines Verfahrens zur Oberflächenbearbeitung gemäß den Ansprüchen 1 bis 5, gekennzeichnet durch Führungswalzen (11, 10, 8, 8', 7, 12) zur Führung der Warenbahn, eine Umlenkwalze (2) zur Richtungsumkehr der Warenbahn sowie eine in den Bahnverlauf ein- beziehungsweise ausschwenkbare Umschlingungswalze (8', 8") zur gemeinsamen Führung der ankommenden und auslaufenden Warenbahn (1, 1') und eine anschließende an die Schichtseite (3') der behandelten Warenbahn anlegbare Reinigungswalze (13).

7. Vorrichtung nach Anspruch 6, dadurch gekennzeichnet, daß die Anlegestelle (15) der Reinigungswalze (13) an der Materialbahn (1') an der Stelle liegt, bei der die Warenbahn die Umschlingungswalze verläßt und daß gegenüber der Stelle (15) die Oberfläche (16) der Reinigungswalze (13) mit einer Absaugungsvorrichtung (14) beaufschlagbar ist.

8. Verfahren nach Anspruch 1, dadurch gekennzeichnet, daß die Warenbahn (1) ein dünner Polyethylenterephthalat-Schichtträger ist, der mit einer magnetischen Dispersion beschichtet ist, bei welcher in einem polymeren Bindemittel feinteilige magnetische Pigmente und gegebenenfalls weitere feinteilige nichtmagnetische Pigmente feindispergiert vorliegen.

9. Verfahren nach Anspruch 8, dadurch gekennzeichnet, daß die feinteiligen magnetischen Pigmente hauptsächlich nadelförmiges CrO₂ sind.

10. Verfahren nach Anspruch 9, dadurch gekennzeichnet, daß die magnetisierbaren Pigmente γ-Fe₂O₃, Fe₃O₄, Metallpulver oder Metall-Legierungspulver oder Mi schungen davon oder Mischungen dieser Pigmente mit CrO₂ sind.

11. Verfahren nach Anspruch 8, dadurch gekennzeichnet, daß die feinteiligen nichtmagnetischen Pigmente anorganische oder organische Teilchen sind, welche eine schleifende Wirkung haben.

## Claims

1. A method of surface treatment for reducing the abrasiveness of flexible tape-like material webs which are provided on at least one side with a coating which contains abrasive particles, the coated side (3) of the material web (1) being brought into frictional contact with the coated side (3') of the deflected material web (1') while running in the opposite direction thereto and particles subsequently being removed from the coated side, wherein along a contact zone (4, 5) ranging from 2 - 60 mm, the coated side (3) of the material web (1) is passed in the opposite direction to the coated side (3') of the deflected material web (1') and in frictional contact therewith at a tape tension of 0.05 - 0.20 N/mm of tape width.

2. A method as claimed in claim 1, wherein the material web (1, 1') is passed over a common contact zone (4) comprising two deflection rollers (7, 8) and a linear section in between.

3. A method as claimed in claim 1, wherein the material web is passed over a common contact zone (5) in the course of the common wrap around one and the same deflection roller (8').

4. A method as claimed in claim 2 or 3, wherein the angle of wrap (α, β, γ) of the deflection rollers (7, 8, 8') is from greater than 0 to less than 180°.

5. A method as claimed in claim 1, wherein particles present on the layer side (3') of the treated product web are subsequently removed in the contact zone by a swivelable cleaning roller (13) which is coordinated with an extraction apparatus (14).

6. Apparatus for carrying out a method for the surface treatment as claimed in any of claims 1 to 5, which comprises guide rollers (11, 10, 8, 8', 7, 12) for guiding the product web, a deflection roller (2) for reversing the direction of the product web and a wrap-around roller (8', 8'') which can be swiveled in and out along the web path and serves for common guidance of the arriving and departing product web (1, 1') and a following cleaning roller (13) which can be applied to the layer side (3') of the treated product web.

7. Apparatus as claimed in claim 6, wherein the point (15) of application of the cleaning roller (13) on the material web (1') is located at the point where the product web leaves the wrap-around roller, and wherein the surface (16) of the cleaning roller (13) can be coordinated with an extraction apparatus (14) opposite the point (15).

8. A method as claimed in claim 1, wherein the product web (1) is a thin polyethylene terephthalate substrate which is coated with a magnetic dispersion in which finely divided magnetic pigments and, if required, further finely divided nonmagnetic pigments are present as a fine dispersion in a polymeric binder.

9. A method as claimed in claim 8, wherein the finely divided magnetic pigments are mainly acicular CrO₂.

10. A method as claimed in claim 9, wherein the magnetizable pigments are γ-Fe₂O₃, Fe₃O₄, metal powder or metal alloy powder or a mixture thereof or a mixture of these pigments with CrO₂.

11. A method as claimed in claim 8, wherein the finely divided nonmagnetic pigments are inorganic or organic particles which have an abrasive effect.

## Revendications

1. Procédé de traitement de surface, pour diminuer l'abrasivité de bandes de matériau flexibles se présentant sous forme de ruban, pourvues sur au moins une face d'un revêtement contenant des particules abrasives, la face revêtue (3) de la bande de matériau (1) étant mise en contact de frottement à contresens avec la face revêtue (3') de la bande de matériau (1') ayant été retournée, suite à quoi les particules reposant sur elle sont enlevées de la face revêtue, caractérisé par le fait que la face revêtue (3) de la bande de matériau (1) est guidée, en suivant un trajet de contact (4, 5) dont la longueur est comprise dans la plage allant de 2 à 60 mm, à contresens du déplacement de la face revêtue (3') de la bande de matériau (1') retournée, avec une liaison par frottement, sous une traction située dans la plage allant de 0,05 à 0,20 N/mm de largeur de bande.

2. Procédé selon la revendication 1, caractérisé par le fait que la bande de matériau (1, 1') est guidée sur un trajet de contact (4) commun, comprenant deux rouleaux de renvoi (7, 8) et sur une section linéaire, intermédiaire.

3. Procédé selon la revendication 1, caractérisé par le fait que la bande de matériau est guidée sur un trajet de contact (5) commun pendant la réalisation de l'enlacement commun autour d'un seul et même rouleau de renvoi (8').

4. Procédé selon les revendications 2 et 3, caractérisé par le fait que l'angle d'enlacement (α, β, γ) des rouleaux de renvoi (7, 8, 8') est compris entre une valeur supérieure à 0 et une valeur inférieure à 180°.

5. Procédé selon la revendication 1, caractérisé par le fait que des particules, reposant sur la face de couche (3') de la bande de produit traitée, sont enlevées, après le passage du trajet de contact, par un rouleau de nettoyage (13) pouvant être appliqué par pivotement et sollicité par un dispositif d'aspiration (14).

6. Dispositif de mise en oeuvre d'un procédé de traitement de surface selon les revendications 1 à 5, caractérisé par des rouleaux de guidage (11, 10, 8, 8', 7, 12) pour assurer le guidage de la bande de matériau, un rouleau de renvoi (2) pour assurer l'inversion de sens de la bande de matériau, ainsi qu'un rouleau d'enlacement (8', 8"), susceptible d'être approché, respectivement écarté, par pivotement vis-à-vis de la trajectoire de la bande, pour assurer le guidage commun de la bande de matériau (1, 1') arrivant et partant et par un rouleau de nettoyage (13) applicable subséquemment sur la face de couche (3') de la bande de matériau traitée.

7. Dispositif selon la revendication 6, caractérisé par le fait que le point d'application (15) du rouleau de nettoyage (13) sur la bande de matériau (1') est situé à l'endroit pour lequel la bande de matériau quitte le rouleau d'enlacement et que, par rapport au point (15), la surface (16) du rouleau de nettoyage (13) peut être sollicitée par un dispositif d'aspiration (14).

8. Procédé selon la revendication 1, caractérisé par le fait que la bande de matériau (1) est un support de couche en téréphtalate de polyéthylène mince revêtue d'une dispersion magnétique pour laquelle des pigments magnétiques finement divisés dans un liant polymère et, le cas échéant, d'autres pigments non magnétiques finement divisés sont présents, finement dispersés.

9. Procédé selon la revendication 8, caractérisé par le fait que les pigments magnétiques finement divisés sont principalement du CrO₂ aciculaire.

10. Procédé selon la revendication 9, caractérisé par le fait que les pigments magnétisables sont du γ-Fe₂O₃, Fe₃O₄, de la poudre métallique ou de la poudre d'alliage métallique ou bien des mélanges de ces produits ou des mélanges de ces pigments avec du Cr0₂.

11. Procédé selon la revendication 8, caractérisé par le fait que les pigments non magnétiques finement divisés sont des particules non organiques ou organiques ayant un effet abrasif.
